Europäisches Patentamt

European Patent Office

Office européen des brevets

(19)

(11) Numéro de publication : **0 009 749**
**B1**

(12) **FASCICULE DE BREVET EUROPÉEN**

(45) Date de publication du fascicule du brevet :
05.10.83

(51) Int. Cl.³ : **G 05 D 16/10, F 16 K 31/383**

(21) Numéro de dépôt : 79103622.1

(22) Date de dépôt : 24.09.79

(54) Vanne de régulation de pression à 3 ou 4 niveaux.

(30) Priorité : 29.09.78 FR 7827977

(43) Date de publication de la demande :
16.04.80 Bulletin 80/08

(45) Mention de la délivrance du brevet :
05.10.83 Bulletin 83/40

(84) Etats contractants désignés :
BE DE GB IT NL SE

(56) Documents cités :
CH A 222 326
DE A 2 602 844
FR A 1 159 231
US A 3 517 681
US A 3 916 934

(73) Titulaire : REGIE NATIONALE DES USINES RENAULT
Boîte postale 103 8-10 avenue Emile Zola
F-92100 Boulogne-Billancourt (FR)

(72) Inventeur : Aubert, Paul
71, Rue du Pavé Blanc
F-92120 Clamart (FR)

(74) Mandataire : Casalonga, Alain et al
BUREAU D.A. CASALONGA OFFICE JOSSE & PETIT
Baaderstrasse 12-14
D-8000 München 5 (DE)

Jouve, 18, rue St-Denis, 75001 Paris, France

## Vanne de régulation de pression à 3 ou 4 niveaux.

La présente invention, due à la collaboration de Monsieur Paul Aubert, se rapporte à une vanne de régulation de pression à 3 ou 4 niveaux utilisant une chambre intermédiaire dont l'alimentation en fluide se fait par deux canaux en parallèle ayant chacun leur propre dispositif d'étranglement.

On connaît déjà (brevet US 3.916.934) une vanne de régulation de pression destinée à maintenir une pression de ligne sensiblement constante et à alimenter sélectivement un organe récepteur. Un tiroir mobile est soumis d'une part à l'action différentielle de la pression de ligne s'exerçant dans une chambre intermédiaire et dans une chambre d'extrémité et d'autre part à un ressort de façon à laminer plus ou moins le débit en direction d'un réservoir. La valeur de la pression de ligne est asservie à une pression représentant une information provenant d'un dispositif gouverneur. Un tel asservissement ne permet pas cependant la définition de trois ou quatre niveaux précis et prédéterminés de pression d'alimentation comme recherché dans la présente invention.

On connaît d'autres dispositifs complexes qui, par des combinaisons de plusieurs vannes, permettent d'obtenir 3 ou 4 niveaux de pression déterminés différents.

La présente invention a pour objet de réaliser un dispositif de vanne de régulation de pression de fabrication particulièrement simple et susceptible de fournir 3 ou 4 niveaux de pression déterminés différents selon le branchement utilisé.

Selon l'invention, la vanne de régulation de pression permettant l'obtention de 3 ou 4 niveaux de pression différents comprend un corps dans lequel coulisse un tiroir central. Ce tiroir central comporte deux épaulements sur lesquels s'appliquent, d'une part, un moyen élastique prenant appui sur le corps et, d'autre part, un petit piston. L'épaulement du tiroir sur lequel agit le moyen élastique vient étrangler sur son autre face le fluide d'alimentation entre une chambre dans laquelle débouche un canal d'alimentation et une chambre en communication avec un retour au réservoir. L'extrémité de l'autre épaulement du tiroir sur laquelle agit le petit piston est située dans une chambre intermédiaire. Le petit piston a une face en contact avec le tiroir dans la chambre intermédiaire et l'autre face située dans une chambre d'extrémité en liaison avec le fluide d'alimentation. Le tiroir est en équilibre sous l'action, d'une part, du moyen élastique, et d'autre part, de la pression du fluide d'alimentation qui agit sur le petit piston et de la pression de la chambre intermédiaire qui agit sur la face de l'épaulement du tiroir selon l'invention, deux canaux en parallèle ayant chacun son propre dispositif d'étranglement relient la chambre intermédiaire, chacun indépendamment ou les deux ensemble, à l'alimentation ou au réservoir. La pression ainsi obtenue dans la chambre intermédiaire s'exerce sur un épaulement de section supérieure à celle sur laquelle s'exerce la pression du fluide d'alimentation dans la chambre d'extrémité de façon à agir à l'encontre du moyen élastique.

Dans un mode de réalisation préféré, le moyen élastique est un ressort.

Dans un autre mode de réalisation préféré, les dispositifs d'étranglement des canaux d'alimentation de la chambre intermédiaire sont des gicleurs montés à force.

La vanne de régulation de pression à 3 ou 4 niveaux peut avantageusement être appliquée dans un circuit hydraulique d'alimentation d'un récepteur où les différents niveaux de pression sont atteints en mettant en communication l'un des deux ou les deux canaux d'alimentation de la chambre intermédiaire, soit avec la pression d'alimentation, soit avec le réservoir.

La vanne de régulation de pression à 3 ou 4 niveaux, selon l'invention, présente l'avantage de pouvoir obtenir jusqu'à 4 niveaux de pression en intégrant deux dispositifs d'étranglement sur l'alimentation d'une chambre intermédiaire d'un équipage comprenant un tiroir, un petit piston et un moyen élastique.

D'autres caractéristiques et avantages de la présente invention ressortiront de la description qui suit d'un mode de réalisation particulier donné à titre d'exemple et nullement limitatif, en référence aux dessins annexés sur lesquels :

la figure 1 représente, en coupe longitudinale, la vanne de régulation de pression à 3 ou 4 niveaux selon l'invention ;

la figure 2 représente la vanne de régulation de pression de la figure 1 qui contrôle le circuit hydraulique d'un récepteur, les deux canaux d'alimentation de la chambre intermédiaire étant reliés au réservoir ;

la figure 3 représente la vanne de régulation de pression de la figure 1 qui contrôle le circuit hydraulique d'un récepteur, l'un des canaux d'alimentation de la chambre intermédiaire étant relié au circuit d'alimentation, l'autre canal étant relié au réservoir ;

la figure 4 représente la vanne de régulation de pression de la figure 1 qui contrôle le circuit hydraulique d'un récepteur, le canal d'alimentation de la chambre intermédiaire qui était au circuit d'alimentation dans la figure 3 étant relié au réservoir et l'autre canal étant relié au circuit d'alimentation ;

la figure 5 représente la vanne de régulation de pression de la figure 1 qui contrôle le circuit hydraulique d'un récepteur, les deux canaux d'alimentation de la chambre intermédiaire étant reliés au circuit d'alimentation.

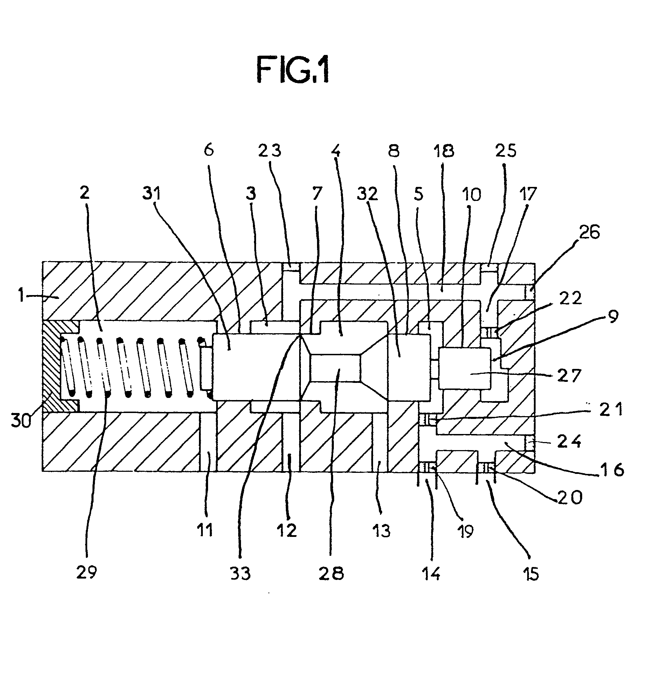

Telle que représentée en coupe longitudinale sur la figure 1, la vanne de régulation de pression à 3 ou 4 niveaux de pression comprend un corps 1 dans lequel est réalisé un grand alésage central prolongé par un petit alésage central. Quatre chambres repérées 2, 3, 4 et 5 débouchent dans le grand alésage qui a ainsi 3 portées repérées 6, 7 et 8. La chambre 5 et une chambre 9 débouchent dans le petit alésage qui a ainsi une portée 10. La chambre 2 est reliée à un canal 11. La chambre 3 appelée chambre d'alimentation est reliée à un canal 12. La chambre 4 est reliée à un canal 13. La chambre 5 appelée chambre intermédiaire est reliée à un canal 14.

Un canal de dérivation en deux parties 15 et 16 est relié au canal 14. La chambre 9 appelée chambre d'extrémité est reliée à la chambre d'alimentation 3 par les canaux 17, 18 et 12. A l'entrée de chacun des canaux 14 et 15, il y a respectivement les gicleurs 19 et 20. A l'entrée de la chambre 5 est monté un gicleur d'amortissement 21 et un autre gicleur d'amortissement 22 est monté à l'entrée de la chambre 9. Ces différents canaux sont fermés par des bouchons 23, 24, 25 et 26.

Dans les alésages centraux, viennent se monter successivement un petit piston 27, un tiroir 28, un ressort 29 et un bouchon 30.

Le petit piston 27 coulisse dans le petit alésage sur la portée 10. Le tiroir 28 coulisse dans le grand alésage sur les portées 6 et 8 à l'aide de ses deux épaulements 31 et 32. Le tiroir, en se déplaçant, agrandit ou réduit l'étranglement 33 situé entre la chambre d'alimentation 3 et la chambre 4 reliée au réservoir par le canal 13. La chambre 2 est aussi reliée au réservoir par le canal 11.

Si l'on appelle :
— la pression d'alimentation du circuit = $P_a$
— la pression régnant dans la chambre intermédiaire = $P_i$
— la pression du tiroir = S
— la section du petit piston = s
— la force du ressort = R

Le tiroir 28 est en équilibre sous l'action du ressort 29, d'une part, et sous l'action des pressions d'alimentation et intermédiaire, d'autre part, cet équilibre est représenté par l'égalité suivante :

$$P_a \times s + P_i \times (S - s) = R$$

d'où
$$P_a = \frac{R - P_i(S - s)}{s}$$

ainsi la pression d'alimentation $P_a$ dépend, d'une part, du ressort 29 et des sections S et s qui sont des données de construction et, d'autre part, de $P_i$.

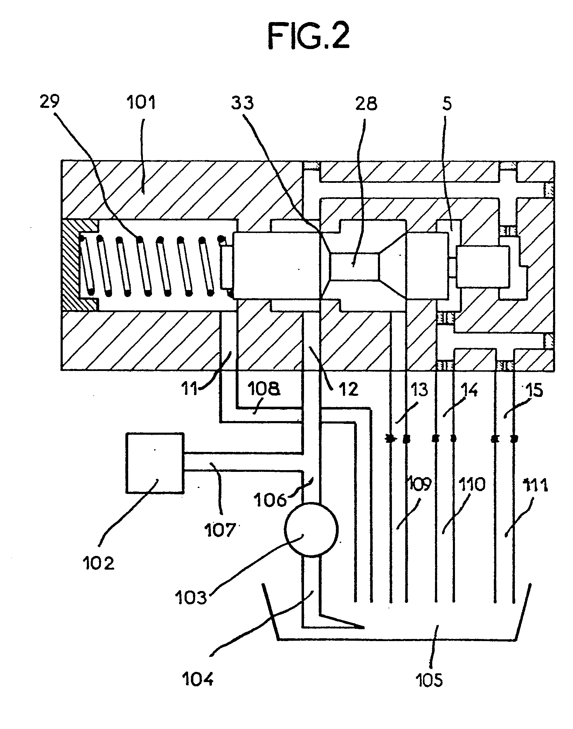

Des exemples d'utilisation de la vanne de régulation de pression à 3 ou 4 niveaux de pression, selon l'invention, sont donnés dans les figures 2, 3, 4 et 5 et ils feront mieux comprendre son fonctionnement.

Sur la figure 2, une vanne de régulation de pression à 4 niveaux 101, comme décrit ci-dessus, est branchée sur un circuit hydraulique d'alimentation d'un récepteur 102. Ce circuit comprend une pompe 103 qui aspire l'huile par une canalisation 104 dans un réservoir 105. La pompe refoule l'huile dans les canalisations 106 et 107. Sur la canalisation 107, est branché le récepteur 102 et sur la canalisation 106 est branchée la vanne 101, objet de l'invention, par son canal 12. Les canaux 11 et 13, de la vanne 101, sont raccordés au réservoir par les canalisations 108 et 109. Les canaux 14 et 15 de la vanne 101 sont également raccordés au réservoir par les canalisations 110 et 111. La pression qui règne dans la chambre intermédiaire 5 est nulle puisqu'elle est raccordée au réservoir. L'équilibre du tiroir 28 est représenté par l'égalité suivante :

$$P_a \times s = R$$

d'où
$$P_a = \frac{R}{s}.$$

On obtient ainsi dans le circuit d'alimentation du récepteur le premier niveau de pression qui est le niveau le plus élevé. Quant la pression d'alimentation diminue par rapport à ce niveau, l'action sur le tiroir 28 due à la pression diminue et le ressort 29 repousse le tiroir 28, ce qui diminue la section de l'étranglement 33 de retour au réservoir et ramène la pression à son niveau initial.

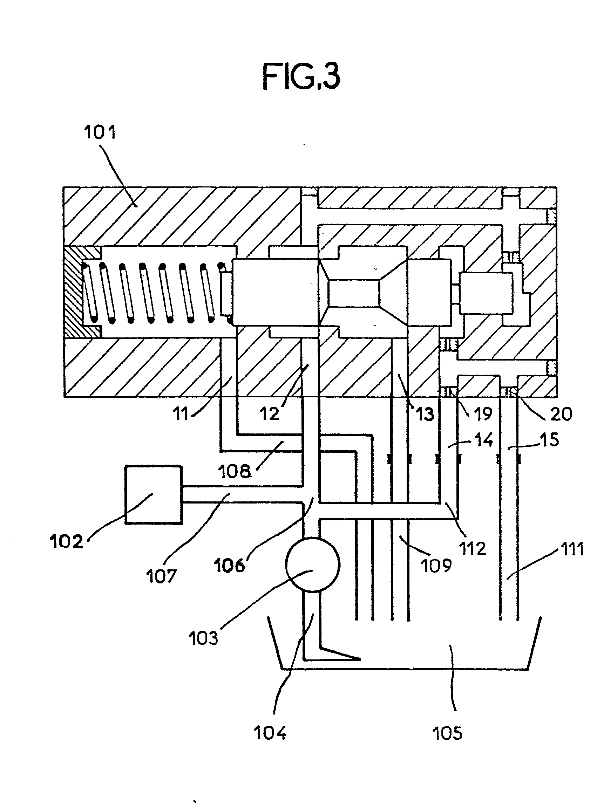

La figure 3 montre la vanne de régulation de pression 101 qui est branchée sur un circuit hydraulique d'alimentation du récepteur 102. Ce circuit comprend une partie identique au circuit de la figure 2 avec un réservoir 105, une pompe 103, un récepteur 102, une vanne 101 et des canalisations 104, 106, 107. Sur la canalisation 106, est branchée la vanne 101, objet de l'invention, par son canal 12. Les canaux 11 et 13 de la vanne 101 sont raccordés au réservoir par les canalisations 108, 109. Le canal 14 de la vanne 101 est raccordé au circuit d'alimentation par la canalisation 112. Le canal 15 est raccordé au réservoir par la canalisation 111. Le gicleur 19 a une section $a$ plus petite que la section $b$ du gicleur 20. Le débit $Q_3$ qui passe à travers ces deux gicleurs étant le même, on a l'égalité :

$$Q_3 = k.a \sqrt{P_a - P_i} = k.b \sqrt{P_i}$$

(les deux gicleurs étant considérés en paroi mince).
k = coefficient de débit, d'où

$$P_i = P_a \times \frac{a^2}{a^2 + b^2}.$$

L'équilibre du tiroir 28 est représenté par l'égalité suivante :

$$P_a \times s + P_i \times (S - s) = R$$

$$P_a \times s + P_a \frac{a^2}{a^2 + b^2} (S - s) = R$$

$$P_a = \frac{R}{s + \dfrac{a^2}{a^2 + b^2} (S - s)}$$

Le circuit d'alimentation du récepteur a un deuxième niveau de pression qui est d'une valeur inférieure au premier niveau du circuit de la figure 2.

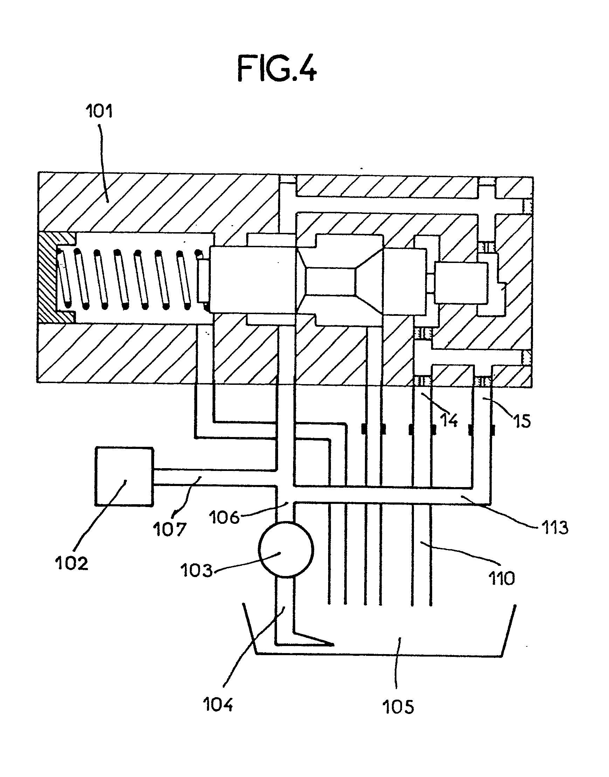

La figure 4 montre la vanne de régulation de pression 101 qui est branchée sur un circuit hydraulique d'alimentation du récepteur 102. Ce circuit comprend une partie identique au circuit de la figure 2 avec un réservoir 105, une pompe 103, un récepteur 102, une vanne 101 et des canalisations 104, 106 107. Le canal 14 de la vanne 101 est raccordé au réservoir par la canalisation 110. Le canal 15 de la vanne 101 est raccordé au circuit d'alimentation par la canalisation 113.

Le débit Q qui passe à travers les deux gicleurs étant le même, on a l'égalité :

$$Q_4 = k \cdot b \sqrt{P_a - P_i} = k \cdot a \sqrt{P_i}$$

d'où
$$P_i = P_a \times \frac{b^2}{a^2 + b^2}.$$

L'équilibre du tiroir 28 est représenté par l'égalité suivante :

$$P_a \times s + P_i \times (S - s) = R$$

$$P_a \times s + P_a \frac{b^2}{a^2 + b^2}(S - s) = R$$

$$P_a = \frac{R}{s + \frac{b^2}{a^2 + b^2}(S - s)}.$$

Comme a < b, la pression $p_a$ de la figure 4 est plus petite que la pression $P_a$ de la figure 3. Le circuit d'alimentation du récepteur a un troisième niveau de pression qui est d'une valeur inférieure au deuxième niveau du circuit de la figure 3.

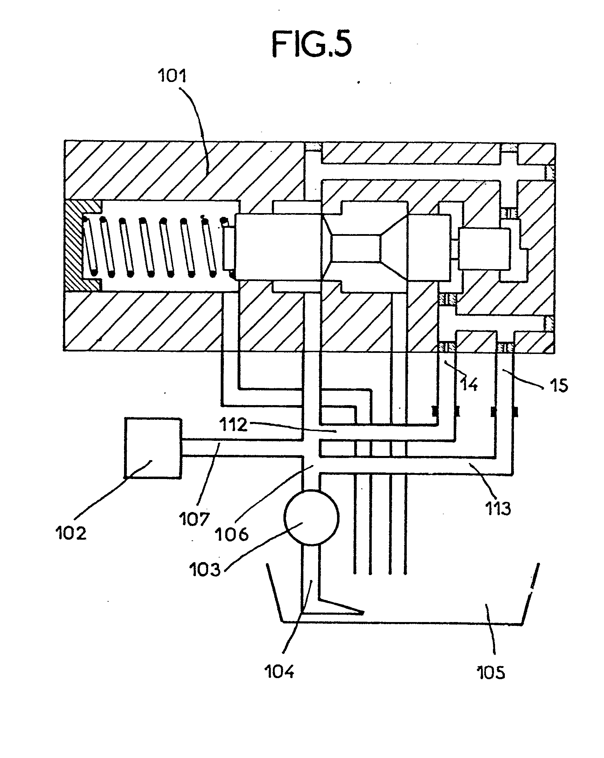

La figure 5 montre la vanne de régulation de pression 101 qui est branchée sur un circuit hydraulique d'alimentation du récepteur 102. Ce circuit comprend une partie identique au circuit de la figure 2 avec un réservoir 105, une pompe 103, un récepteur 102, une vanne 101 et des canalisations 104, 106, 107. Les canaux 14 et 15 de la vanne 101 sont raccordés au circuit d'alimentation par les canalisations 112 et 113. La pression qui règne dans la chambre intermédiaire 5 est égale à la pression d'alimentation $P_i = P_a$.

L'équilibre du tiroir 28 est représenté par l'égalité suivante :

$$P_a \times s + P_i \times (S - s) = R$$
$$P_a \times s + P_a \times (S - s) = R$$
$$P_a = \frac{R}{s + (S - s)}$$

comme
$$\frac{a^2}{a^2 + b^2} < \frac{b^2}{a^2 + b^2} < 1$$

la pression $P_a$ de la figure 5 est plus petite que la pression $P_a$ de la figure 4. Le circuit d'alimentation du récepteur a un quatrième niveau de pression qui est d'une valeur inférieure au troisième niveau du circuit de la figure 4.

REMARQUE : Dans les figures 2, 3, 4 et 5, le déplacement du tiroir 28 étant relativement faible, on considère que l'effort R est relativement constant.

Si les gicleurs 19 et 20 avaient des sections a et b identiques, les niveaux de pression des circuits des figures 3 et 4 seraient identiques et on aurait une vanne de régulation de pression à 3 niveaux.

## Revendications

1. Vanne de régulation de pression permettant d'obtenir un niveau de pression variable régulé, comprenant un corps (1) dans lequel coulisse un tiroir central (28) soumis d'une part à l'action d'un moyen élastique (29) tendant à le déplacer dans un sens et d'autre part à l'action de la pression du fluide d'alimentation $(p_a)$ dans une chambre d'extrémité (9) dudit corps, s'exerçant sur une portion (s) du tiroir (28) et tendant à le déplacer dans le sens opposé, un passage (33) pour le fluide d'alimentation vers un réservoir pouvant être plus ou moins étranglé selon la position du tiroir (28), ledit corps comprenant en outre une chambre intermédiaire (5), caractérisée par le fait que deux canaux en parallèle (14, 15) ayant chacun son propre dispositif d'étranglement (19, 20) relient ladite chambre intermédiaire (5) chacun indépendamment ou les deux ensemble selon le branchement utilisé, à l'alimentation ou au réservoir et que la pression $(p_i)$ ainsi obtenue dans la chambre intermédiaire (5) s'exerce sur un épaulement de section (S) supérieure à celle (s) sur laquelle s'exerce la pression du fluide d'alimentation $(p_a)$ dans la chambre d'extrémité (9) de façon à agir à l'encontre de l'action du moyen élastique (29), trois ou quatre niveaux de pression pouvant être ainsi obtenus selon le branchement utilisé.

2. Vanne de régulation de pression selon la revendication 1, caractérisée par le fait que les sections de passage (a, b) des dispositifs d'étranglement (19, 20) des canaux en parallèle (14, 15) reliés à la chambre intermédiaire (5) sont différentes de façon à permettre l'obtention de quatre niveaux de pression différents selon le branchement utilisé.

3. Vanne de régulation de pression selon les revendications 1 ou 2, caractérisée en ce que le moyen élastique (24) est un ressort.

4. Vanne de régulation de pression selon l'une des revendications précédentes, caractérisée en ce que les dispositifs d'étranglement des canaux (14, 15) d'alimentation de la chambre intermédiaire (5) sont des gicleurs (19, 20) montés à force.

5. Vanne de régulation de pression selon l'une des revendications précédentes, caractérisée en ce que l'alimentation de la chambre intermédiaire (5) a un gicleur d'amortissement (21).

6. Vanne de régulation de pression selon l'une des revendications précédentes, caractérisée par le fait que le tiroir central comprend un premier épaulement (31) sur l'une des faces duquel agit le moyen élastique (29), l'autre face étranglant plus ou moins le passage (33) pour le fluide d'alimentation vers le réservoir et un deuxième épaulement (32) dont une face située dans la chambre intermédiaire (5) est soumise à l'action d'un petit piston (27) sur lequel s'exerce la pression du fluide d'alimentation dans une chambre d'extrémité (9).

7. Vanne de régulation de pression selon la revendication 6, caractérisée en ce que l'alimentation de la chambre d'extrémité (9) a un gicleur d'amortissement (22).

8. Vanne de régulation de pression selon l'une des revendications précédentes, caractérisée en ce qu'elle est utilisée dans un circuit hydraulique d'alimentation d'un récepteur, les deux canaux (14, 15) d'alimentation de la chambre intermédiaire (5) étant reliés au réservoir.

9. Vanne de régulation de pression selon l'une des revendications 1 à 7, caractérisée en ce qu'elle est utilisée dans un circuit hydraulique d'alimentation d'un récepteur, l'un des canaux (14, 15) d'alimentation de la chambre intermédiaire (5) étant relié au réservoir et l'autre au circuit d'alimentation.

10. Vanne de régulation de pression selon l'une des revendications 1 à 7, caractérisée en ce qu'elle est utilisée dans un circuit hydraulique d'alimentation d'un récepteur, les deux canaux (14, 15) d'alimentation de la chambre intermédiaire (5) étant reliés au circuit d'alimentation.

**Claims**

1. A pressure control valve enabling a controlled variable pressure to be obtained, comprising a body (1) in which a central spool (28) slides which is subjected on the one hand to the action of an elastic means (29) tending to move it in one direction and on the other hand to the action of the feed fluid pressure ($p_a$) in an end chamber (9) in the said body exerted on a portion (s) of the spool (28) and tending to move it in the opposite direction, a passage (33) for the feed fluid leading to a reservoir and able to be throttled to a greater or lesser extent depending on the position of the slide (28), with the said body also comprising an intermediate chamber (5), characterized in that two ducts in parallel (14, 15) each having its own throttling device (19, 20) connect the said intermediate chamber (5), either each separately or both together depending on the connection used, to the feed or to the reservoir and in that the pressure ($p_i$) thus obtained in the intermediate chamber (5) is exerted on a shoulder having a cross-section (s) exceeding the cross-section (s) which is subjected to the pressure of the feed fluid ($p_a$) in the end chamber (9) in such a way as to act in opposition to the action of the elastic means (29), it being thus possible to obtain three of four pressure levels depending on the connection used.

2. The pressure control valve according to claim 1, characterized in that the passage cross-section (a, b) of the throttling devices (19, 20) of the ducts in parallel (14, 15) connected to the intermediate chamber (5) differ in such a way as to enable four different pressure levels to be obtained depending on the connection used.

3. The pressure control valve according to claims 1 or 2, characterized in that the elastic means (24) is a spring.

4. The pressure control valve according to any of the preceding claims, characterized in that the throttling devices of the ducts (14, 15) feeding the intermediate chamber (5) are force-fitted spray nozzles.

5. The pressure control valve according to any of the preceding claims characterized in that the feeding duct of the intermediate chamber (5) has a damping nozzle (21).

6. The pressure control valve according to any of the preceding claims, characterized in that the central spool comprises a first shoulder (31) with the elastic means (29) acting on one of its faces, and with the other face throttling to a greater or lesser extent the passage (33) for the feed fluid leading to the reservoir, and a second shoulder (32) one face of which located in the intermediate chamber (5) is subjected to the action of a small piston (27) which is subjected to the pressure of the feed fluid in an end chamber (9).

7. The pressure control valve according to claim 6, characterized in that the feed duct to the end chamber (9) has a damping nozzle (22).

8. The pressure control valve according to any of the preceding claims, characterized in that it is used in a hydraulic circuit feeding a receiver, with both the ducts (14, 15) feeding the intermediate chamber (5) being connected to the reservoir.

9. The pressure control valve according to any of claims 1 to 7, characterized in that it is used in a hydraulic circuit feeding a receiver, with one of the ducts (14, 15) feeding the intermediate chamber (5) being connected to the reservoir and the other to the feed circuit.

10. The pressure control valve according to any of claims 1 to 7, characterized in that it is used in a hydraulic circuit feeding a receiver, with both the ducts (14, 15) feeding the intermediate chamber (5) being connected to the feed circuit.

**Ansprüche**

1. Druckregelventil, das das Erreichen einer variablen, geregelten Druckhöhe ermöglicht, und einen Ventilkörper (1) enthält, in dem ein Zentralschieber (28) gleitet, der einerseits unter der Einwirkung eines elastischen Mittels (29), das ihn in der einen Richtung verschieben will, und andererseits unter der Einwirkung des Drucks des Einspeisungsfluids ($p_a$) in einer Endkammer (9) des genannten Ventilkörpers steht, der sich auf einen Teil (s) des Schiebers (28) auswirkt und bestrebt ist, diesen in der entgegengesetzten Richtung zu verschieben, ferner einen Durchgang (33) für das Einspeisungsfluid zu einem Reservoir enthält, der je nach Stellung des Schiebers (28) mehr oder weniger gedrosselt ist, wobei der genannte Ventilkörper ferner eine Zwischenkammer (5) enthält, dadurch gekennzeichnet, daß zwei Parallelkanäle (14, 15), die jeweils mit einer gesonderten Drosselvorrichtung (19, 20) ausgestattet sind, die genannte Zwischenkammer (5) jeweils unabhängig oder die beiden zusammen, je nach benützter Verzweigung, mit der Speisequelle oder mit dem Reservoir verbindet, und daß der somit in der Zwischenkammer (5) erhaltene Druck ($p_i$) auf einen Bund mit einem größeren Querschnitt (S) einwirkt als der (s), auf den der Druck des Einspeisungsfluids ($p_a$) in der Endkammer (9) wirkt, so daß er gegen die Wirkung des elastischen Mittels (29) wirkt und somit je nach benützter Verzweigung drei bzw. vier Druckhöhen erhalten werden können.

2. Druckregelventil gemäß Anspruch 1, dadurch gekennzeichnet, daß die Querschnitte der Durchgänge (a, b) der Drosselvorrichtungen (19, 20) der Parallelkanäle (14, 15), die mit der Zwischenkammer (5) verbunden sind, unterschiedlich sind, um so vier unterschiedliche Druckhöhen je nach benützter Verzweigung zu ermöglichen.

3. Druckregelventil gemäß Anspruch 1 oder 2, dadurch gekennzeichnet, daß es sich bei dem elastischen Mittel (24) um eine Feder handelt.

4. Druckregelventil gemäß einem der vorstehenden Ansprüche, dadurch gekennzeichnet, daß es sich bei den Drosselvorrichtungen der Kanäle (14, 15) zur Einspeisung in die Zwischenkammer (5) um mit Kraft eingepresste Spritzdüsen (19, 20) handelt.

5. Druckregelventil gemäß einem der vorstehenden Ansprüche, dadurch gekennzeichnet, daß die Einspeisung in die Zwischenkammer (5) eine Dämpfungsdüse (21) hat.

6. Druckregelventil gemäß einem der vorstehenden Ansprüche, dadurch gekennzeichnet, daß der Zentralschieber einen ersten Bund (31) enthält, auf eine dessen Flächen das elastische Mittel (29) wirkt, wobei die andere Fläche den Durchgang (33) für das Einspeisungsfluid gegen das Reservoir mehr oder weniger drosselt, und einen zweiten Bund (32) enthält, dessen eine in der Zwischenkammer (5) gelegene Fläche unter der Wirkung eines kleinen Kolbens (27) steht, auf den sich der Druck des Einspeisungsfluids in einer Endkammer (9) auswirkt.

7. Druckregelventil gemäß Anspruch 6, dadurch gekennzeichnet, daß die Einspeisung in die Endkammer (9) eine Dämpfungsdüse (22) hat.

8. Druckregelventil gemäß einem der vorstehenden Ansprüche, dadurch gekennzeichnet, daß es in einem hydraulischen Speisekreis eines Verbrauchers angewandt wird, wobei die beiden Speisekanäle (14, 15) der Zwischenkammer (5) mit dem Reservoir verbunden sind.

9. Druckregelventil gemäß einem der Ansprüche 1 bis 7, dadurch gekennzeichnet, daß es in einem hydraulischen Speisekreis eines Verbrauchers angewandt wird, wobei einer der beiden Speisekanäle (14, 15) der Zwischenkammer (5) mit dem Reservoir und der andere mit dem Zufuhrsystem verbunden ist.

10. Druckregelventil gemäß einem der Ansprüche 1 bis 7, dadurch gekennzeichnet, daß es in einem hydraulischen Speisekreis eine Verbrauchers angewandt wird, wobei die beiden Speisekanäle (14, 15) der Zwischenkammer (5) mit dem Zufuhrsystem verbunden sind.

# FIG.1

# FIG.2

# FIG.3

# FIG.4

# FIG.5